# EUROPEAN PATENT SPECIFICATION

(11) **EP 2 535 707 B1**
(45) Date of publication and mention of the grant of the patent: **24.10.2018**
(21) Application number: 12171937.1
(22) Date of filing: 14.06.2012
(51) Int. Cl.: G01N 27/407

(54) **Gas sensor**
Gassensor
Capteur de gaz

(30) Priority: 14.06.2011 JP 2011132440; 30.03.2012 JP 2012081685
(43) Date of publication of application: 19.12.2012
(73) Proprietor: NGK Spark Plug Co., Ltd., Nagoya-shi, Aichi 467-8525 (JP)
(72) Inventor: Kouzaki, Kazuhiro, Aichi 467-8525 (JP); Atsumi, Takayoshi, Aichi 467-8525 (JP)
(74) Representative: Grünecker Patent- und Rechtsanwälte PartG mbB

(56) References cited:
- EP-A2- 1 063 520
- JP-A- 2004 037 471
- US-A1- 2005 224 349
- US-A1- 2009 050 481

## Description

### [Technical Field]

The present invention relates to a gas sensor which is installed in, for example, a motorcycle to detect an oxygen concentration in exhaust gas which is exhausted from an internal combustion engine (engine).

### [Background Art]

Conventionally, as a gas sensor, there is known a sensor which includes an oxygen ion conductive gas detection element and which is mounted on an exhaust pipe of an engine of a motorcycle to detect an oxygen concentration in exhaust gas.

As such a gas detection element, there is known a gas detection element which has, for example, a cylindrical element main body (made from zirconia) which is closed at a front end thereof and which includes an inner electrode inside and an external electrode outside the element main body, whereby an electromotive force is generated based on a difference in gaseous conditions (oxygen concentration) between the inside and outside of the gas detection element.

For example, Patent Literature 1 below discloses, as shown in Fig. 14, a gas sensor P5 in which a gas detection element P1 is fixed within a metal shell P2 and a rear end portion of the gas detection element P1 is covered by a metal pipe P3 and a protection pipe P4.

In the gas sensor P5 of this type, a separator P6 (which is positioned at a rear end of the pipe P3) is disposed at a rear end of the gas detection element P1, and a terminal metal fixture P8 is disposed so as to be in contact with an inner electrode P7. Additionally, a rear end portion of this terminal metal fixture P8 is disposed within a through hole P9 in the separator P6 and is connected to lead wires P10 (which pickup sensor outputs) within the through hole P9.

Further, in the gas sensor P5, communication holes P13, P14 are provided in the pipe P3 and the protection pipe P4, respectively, to establish a communication between a space P11 at the rear end portion of the gas detection element P1 (and an internal space P12 of the gas detection element which connects to the space P11) and the atmosphere which constitutes an oxygen reference source. Additionally, a filter P15, which is adapted to allow gas to pass therethrough and prevent the passage of water therethrough, is disposed between the pipe P3 and the protection pipe P4.

### [Related Art Literature]

### [Patent Literature]

[Patent Literature 1] JP-A-2004-37471

### [Summary of the Invention]

### [Problems to be Solved by the Invention]

In the related art described above, however, due to the construction in which the separator is disposed at the rear end portion of the gas detection element and the terminal metal fixture and the lead wires are connected together within the separator, there is caused a problem that the sensor itself is enlarged in size.

To deal with this problem, a method is considered in which the construction of the terminal metal fixture is devised so that the lead wires are connected to the terminal metal fixture inside the gas detection element. However, in this case, the method for locating and securing the terminal metal fixture constitutes an issue.

Namely, in order to position the terminal metal fixture so that the contact portion between the terminal metal fixture and the inner electrode is not shifted, for example, a method is considered in which a radially extending annular flange portion is provided on the terminal metal fixture and the flange portion is held between a rear end face of the gas detection element and a front end face of the separator. However, in this case, there is caused a problem that an atmospheric air passage (a ventilation path) between the internal space of the gas detection element and the atmosphere cannot be ensured.

Namely, the flange portion of the terminal metal fixture is held by the gas detection element and the separator to thereby be tightly adhered thereto, causing a problem that a gap forming a ventilation path does not exist between the gas detection element and the separator.

In particular, in the event that exhaust gas enters the internal space of the gas detection element from the outside or some gas is generated in the interior thereof while the gas sensor is in use, in case the interior of the gas detection element cannot be ventilated to exhaust the gas, the measurement of the gas sensor is disturbed. Therefore, it is important to ensure the ventilation path.

The invention has been made with a view to solving the problem, and an object thereof is to provide a gas sensor which can realize a reduction in size of the gas sensor itself and which can ensure a ventilation path between an internal space of a gas detection element and the atmosphere.

### [Means for Solving the Problems]

(1) According to a first aspect of the invention, there is provided a gas sensor comprising: a gas detection element comprising, an element main body which is made up of a cylindrical solid electrolyte which extends in an axial direction and which is closed at a front end thereof, and an inner electrode and an outer electrode which are provided on an inner side and an outer side of the element main body, respectively; a cylindrical casing which holds the gas detection element inside a through hole which penetrates in the axial direction; a cylindrical separator having electrical insulation properties, which is disposed in an interior of the casing at a rear end side of the gas detection element with a space defined between the casing and itself and through which at least a lead wire is passed; a closure member which is disposed at a rear end side of the separator, through which the lead wire is inserted, and which closes a rear end side of the casing; and a terminal metal fixture which has an electrode contact portion fitted in the gas detection element so as to be brought into contact with the inner electrode and which is connected to the lead wire, wherein the casing has a ventilation hole which is formed at a position further forwards than the closure member to introduce a reference gas from the outside thereof, wherein the terminal metal fixture comprises a lead wire connecting portion which is fitted in the gas detection element and to which the lead wire is connected and an exposed portion which is provided further rearwards than the gas detection element and at least a part of which is brought into contact with the separator, wherein the exposed portion comprises a flange portion which is held between a rear end face of the gas detection element and a front end face of the separator and which projects further radially outwards than the electrode contact portion, and has a gap which is provided between surfaces defined by the rear end face of the gas detection element and the front end face of the separator at a predetermined location in a circumferential direction so as to establish communication between the space and an interior of the gas detection element, and wherein the reference gas that has passed through the ventilation hole passes through the space and the gap to be introduced into an interior of the gas detection element.
   In the gas sensor of the first aspect of the invention, the flange portion provided on the terminal metal fixture is held between the rear end face of the gas detection element and the front end face of the separator. Moreover, the lead wire is connected to the lead wire connecting portion which is situated further forwards than the flange portion of the terminal metal fixture. By so doing, not only can the terminal metal fixture be positioned in place, but also the connecting portion of the lead wire can be provided further forwards than in the conventional gas sensor, thereby making it possible to dispose the gas detection element and the separator so as to lie close to each other. Therefore, compared with the conventional gas sensor, the gas sensor of the invention can be made small in size.
   In addition, in the first aspect of the invention, the exposed portion (having the flange portion) which is provided on the terminal metal fixture so as to lie further rearwards than the gas detection element is brought into contact with the separator, whereby the space is provided between the rear end face of the gas detection element and the front end face of the separator. Specifically speaking, the space is formed between the rear end face of the gas detection element and the front end of the separator as a result of at least the flange portion being held by the gas detection element and the separator. By adopting this configuration, the gap which establishes a communication between the space and the interior of the gas detection element is formed in the space at the predetermined location in the circumferential direction (for example, the location where the exposed portion including the flange portion is not formed).
   Namely, since the ventilation path is ensured which allows the passage of gas between the interior of the gas detection element and the outside thereof (the space outside thereof), the communication is established between the interior and exterior of the gas sensor by this ventilation path. Consequently, atmospheric air outside the gas sensor which constitutes the oxygen reference source can be introduced into the interior of the sensor via the ventilation hole and the space by this ventilation path, and the interior of the sensor can be ventilated so that gas generated therein can be exhausted to the outside thereof.
   In this way, according to the first aspect, the increase in size of the sensor can be suppressed to an extreme extent while ensuring the ventilation path. Namely, the ventilation performance of the interior of the sensor is compatible with the reduction in size of the sensor.
   In addition, at least the lead wire should be inserted through the interior of the separator, and further, the terminal metal fixture which is disposed so as to cover the circumference of the lead wire may also be inserted through the separator.
   Additionally, the gap is preferably formed at other locations than the exposed portion which includes the flange portion in the circumferential direction because a wide space can be ensured. However, for example, the gap may be formed by providing the slit-shaped cutout which can constitute the ventilation path in the exposed portion itself (for example, in the root of the flange portion) which includes the flange portion.
   It should be noted that here, the radial direction means the direction which intersects the axis at right angles, and the circumferential direction means the direction which goes around the axis thereabout.
(2) According to a second aspect of the invention, the flange portion comprises a plurality of flange pieces, and the flange pieces are disposed in the circumferential direction with the gap defined therebetween.
   The second aspect illustrates the preferred configuration of the flange portion.
   In the second aspect, since the ventilation path which enables the flow of gas between the interior and exterior of the gas detection element is ensured by the gap defined between the flange pieces, the flow of gas between the interior and exterior of the sensor can be realized.
   In addition, since plural flange pieces are provided, when the flange pieces are held between the rear end face of the gas detection element and the front end of the separator, there is provided an advantage that the flange pieces (and hence, the terminal metal fixture) can be held and fixed in place firmly.
   It should be noted that here, the "flange pieces" means the exposed portion which includes the flange portion.
(3) According to a third aspect of the invention, a projecting portion is formed to the flange piece which projects in the axial direction to maintain a space between a rear end portion of the gas detection element and a front end portion of the separator
   In the third aspect, since the projecting portions are provided on the flange pieces, the space between the gas detection element and the separator can be ensured larger than the thickness of the flange portion. By so doing, the ventilation path which provides a sufficient ventilation amount can be ensured.
(4) According to a fourth aspect of the invention, the projecting portion is formed to the flange piece at only a part in a circumferential direction thereof.
   The locations where the projecting portions are provided are in abutment with the gas detection element or the separator, and the ventilation is interrupted at the locations where the abutment occurs. However, in the fourth aspect, since the projecting portions are not formed along the full circumferential width of the flange pieces, it is possible to make the ventilation difficult to be interrupted.
(5) According to a fifth aspect of the invention, a rear end face of the separator and a front end face of the closure member are tightly adhered to each other.

In the fifth embodiment, since the rear end face of the separator is tightly adhered to the front end face of the closure member, the gas sensor can be made smaller.

In addition, when the rear end face of the separator is tightly adhered to the front end face of the closure member in this way, the ventilation path which enables the flow of gas is not ensured between the interior and exterior of the gas detection element via the gap between the rear end face of the separator and the front end face of the closure member (and further via the lead wire insertion hole in the separator). In the invention, however, the ventilation path which enables the flow of gas is ensured between the interior and exterior of the gas detection element via the gap of the exposed portion of the terminal metal fixture, and therefore, a communication is established between the interior and exterior of the gas sensor by this ventilation path to thereby realize the flow of gas between the interior and exterior of the gas sensor.

### [Brief Description of the Drawings]

Fig. 1 is an explanatory sectional view depicting a state in which a gas sensor of a first embodiment is taken along the direction of an axis O.
Fig. 2 is a partially cutaway front view of a gas detection element 3.
Fig. 3 is a perspective view depicting a state in which a construction surrounding a terminal metal fixture 9 and a lead wire 11 is taken along the direction of the axis.
Fig. 4(a) is a perspective view of the terminal metal fixture 9, Fig. 4(b) is a plan view of the same fixture, and Fig. 4(c) is a front view thereof.
Fig. 5 is an explanatory enlarged sectional view taken along the direction of the axis which depicts a configuration surrounding a flange piece 75 of the terminal metal fixture 9.
Fig. 6(a) is a perspective view of a terminal metal fixture 101 of a second embodiment, Fig. 6(b) is a plan view of the same fixture, and Fig. 6(c) is a front view thereof.
Fig. 7(a) is a perspective view of a terminal metal fixture 121 of a third embodiment, Fig. 7(b) is a plan view of the same fixture, and Fig. 7(c) is a front view thereof.
Fig. 8(a) is a plan view depicting an upper portion of a terminal metal fixture 141 of a fourth embodiment, and Fig. 8(b) is an explanatory enlarged sectional view taken along an axial direction which depicts a configuration surrounding a flange piece 143.
Fig. 9(a) is a plan view depicting an upper portion of a terminal metal fixture 151 of a fifth embodiment, Fig. 9(b) is an explanatory enlarged sectional view depicting a section taken along the line A-A' in Fig. 9(a) together with a surrounding configuration, and Fig. 9(c) is an explanatory enlarged sectional view depicting a section taken along the line B-B' in Fig. 9(a) together with a surrounding configuration.
Fig. 10(a) is a plan view depicting an upper portion of a terminal metal fixture 171 of a sixth embodiment, and Fig. 10(b) is an explanatory enlarged sectional view taken along an axial direction which depicts a configuration surrounding a flange piece 175.
Fig. 11(a) is a plan view depicting an upper portion of a terminal metal fixture 181 of a modified example made to the sixth embodiment, and Fig. 11(b) is a plan view depicting an upper portion of a terminal metal fixture 191 of another modified example.
Fig. 12 is an explanatory sectional view depicting a state in which a terminal metal fixture 201 of another embodiment is mounted.
Fig. 13 is an explanatory perspective view depicting the construction of a flange piece 221 of a terminal metal fixture 225 of a further embodiment.

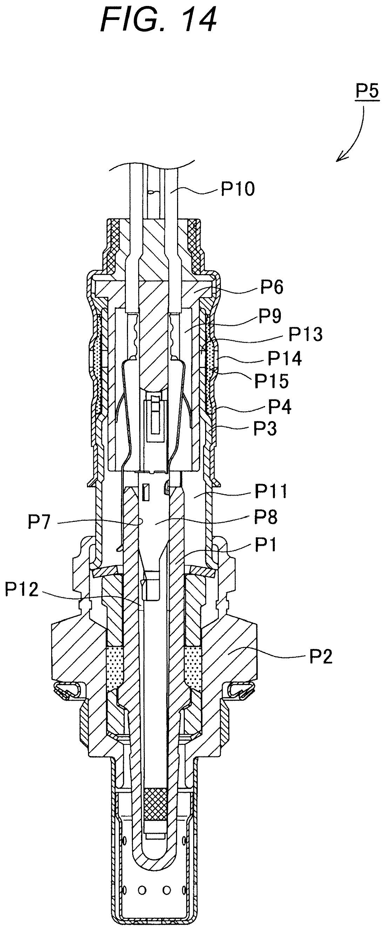

Fig. 14 is an explanatory sectional view depicting a related art gas sensor.

### [Mode for Carrying out the Invention]

Hereinafter, embodiments of the invention will be described together with the drawings.

### [First Embodiment]

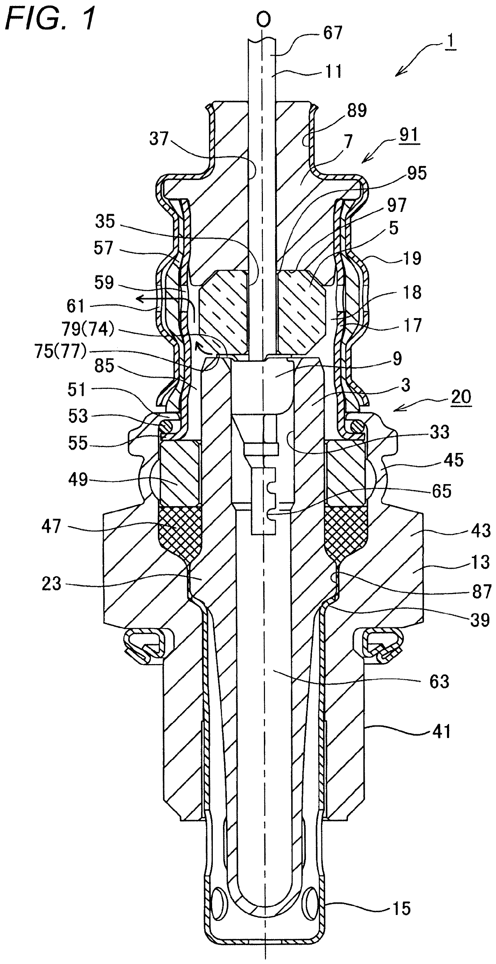

Here, a gas sensor 1 (refer to Fig. 1) will be described using an oxygen sensor which is fastened to an exhaust pipe of a vehicle such as a motorcycle, for example, so that a front end portion of the gas sensor 1 is kept projecting into the interior of the exhaust pipe for measuring an oxygen concentration in exhaust gas.

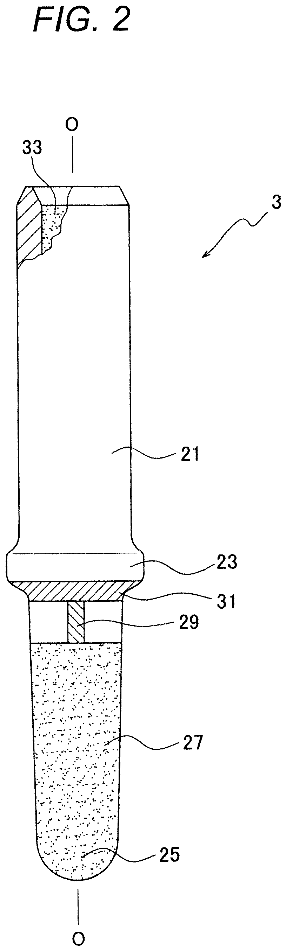

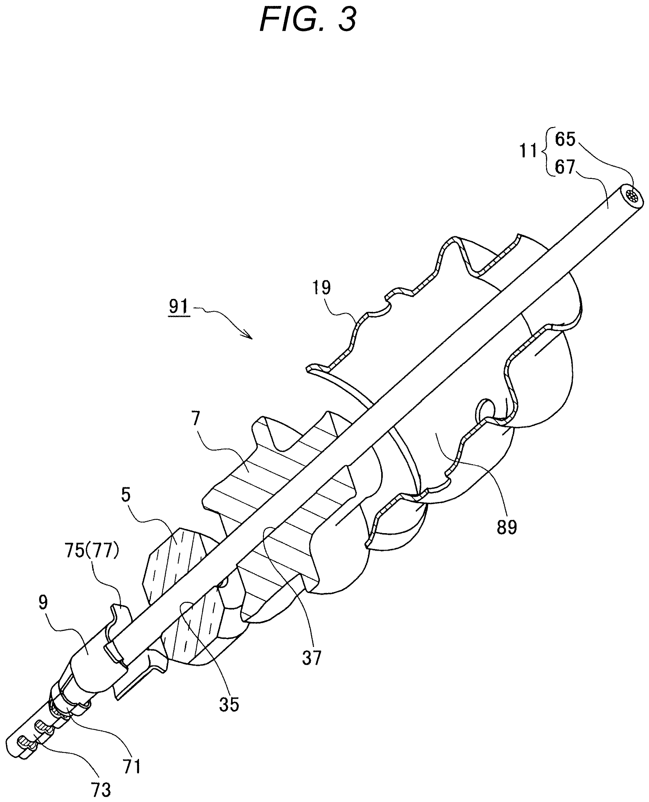

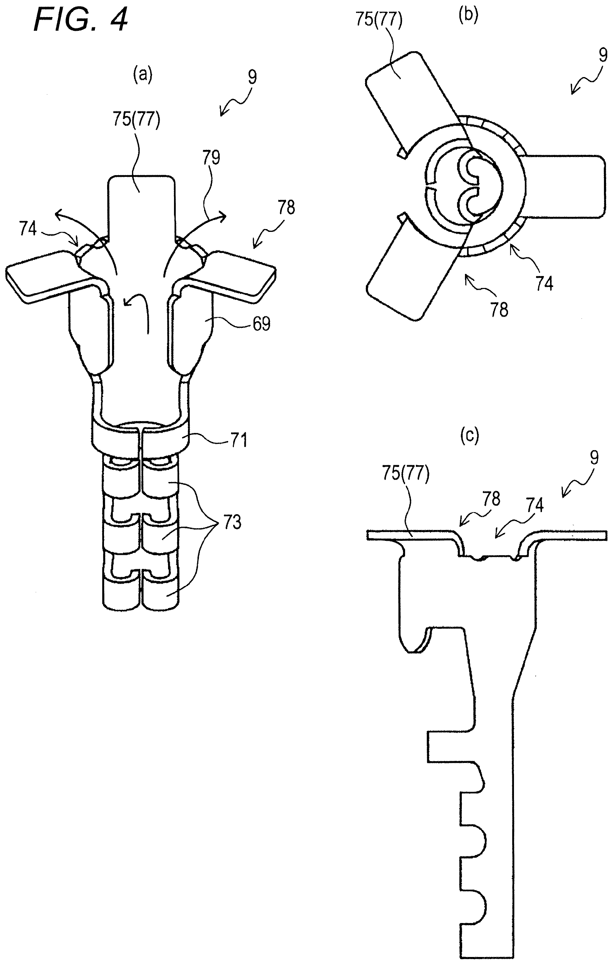

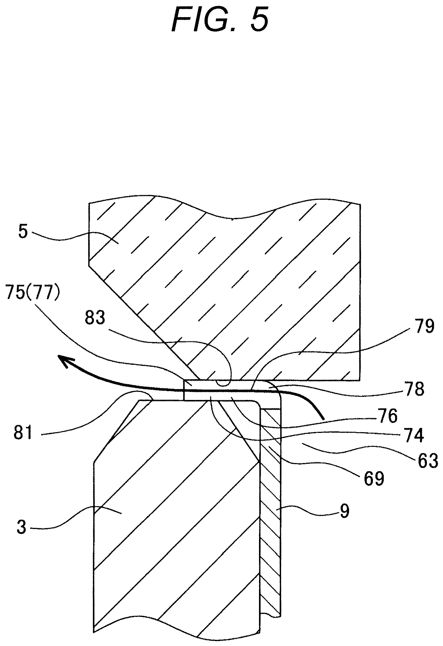

Hereinafter, although respective configurations of constituent parts will be described below, in the following description, of directions which follows an axis O, an end where a protector 15 is mounted is referred to as a front end, whereas an opposite end to the front end is referred to as a rear end.
a) Firstly, the configuration of the gas sensor 1 of this embodiment will be described.
   As shown in Fig. 1, the gas sensor 1 of the first embodiment includes mainly a gas detection element 3, a separator 5, a closure member 7, a terminal metal fixture 9 and a lead wire 11. The gas sensor 1 also includes a metal shell 13, a protector 15, a pipe 17 and a protection pipe 19 which are provided so as to surround the group of constituent parts described above. Additionally, a casing 20 is made up of the metal shell 13 and the pipe 17.
   In addition, this gas sensor 1 is a so-called unheated oxygen sensor having no heater for heating the gas detection element 3 in which the gas detection element 3 is activated by making use of heat of exhaust gases to measure an oxygen concentration therein.
   Hereinafter, respective configurations of the constituent parts will be described below.
   As shown in Fig. 2, in the constituent parts of the gas sensor 1, the gas detection element 3 has a cylindrical element main body 21 made of a solid electrolyte having oxygen ion conductive properties, having a bottom by being closed at a front end portion 25 thereof and extending in the direction of an axis O. A collar portion 23 is provided to extend around an outer circumference of the element main body 21 while projecting outwards in a radial direction.
   As solid electrolytes from which the element main body 21 is made, a representative one is, for example, a solid solution of ZrO₂ which contains Y₂O₃ or CaO. In addition to this, a solid solution may be used which contains an oxide of alkaline earth metal or rare earth metal and ZrO₂. Further, the solid solution may contain HfO₂.
   An outer electrode 27 is formed on an outer circumferential surface of the element main body 21 at the front end portion 25 of the gas detection element 3. This outer electrode 27 is formed of Pt or a Pt alloy and is made porous. A vertical lead portion 29 of Pt is formed so as to extend in an axial direction from the outer electrode 27. This vertical lead portion 29 connects to an annular lead portion 31 made of Pt which is formed into an annular shape at a lower side (downward in Fig. 2) of the collar portion 23.
   On the other hand, an inner electrode 33 is formed on an inner circumferential surface of the element main body 21 of the gas detection element 3. This inner electrode 33 is also formed of Pt or a Pt alloy and is made porous.
   Returning to Fig. 1, the separator 5 is a cylindrical member which is made from, for example, alumina having electrical insulation properties. A through hole 35 through which the lead wire 11 is inserted is formed in an axial center of the separator 5.
   Additionally, a space 18 is provided between the separator 5 and the pipe 17 (which covers an outer circumferential side of the separator 5).
   The closure member 7 is a cylindrical seal member which is made of, for example, a fluorine rubber, and a through hole 37 through which the lead wire 11 is inserted is formed in an axial center thereof. A front end face 95 of the closure member 7 is tightly adhered to a rear end face 97 of the separator 5, and an outer circumference of a rear end portion of the closure member 7 is tightly adhered to an inner circumferential surface of the pipe 17 and an inner circumferential surface of the protection pipe 19, whereby the interior and exterior of the gas sensor 1 are separated. Namely, a rear end portion of the casing 20 is closed by the closure member 7.
   The terminal metal fixture 9 is made of, for example, Inconel 750 (a trademark of Inco Alloys International, Inc. of UK) and is a substantially cylindrical member for picking up and sending sensor outputs to the outside. As will be described in detail later, this terminal metal fixture 9 is connected to the lead wire 11 and is made to be brought into contact with the inner electrode 33 of the gas detection element 3.
   The metal shell 13 is a cylindrical member made of, for example, a SUS310S. A step portion 39 is provided around an inner circumferential surface of the metal shell 13 so as to extend radially inwards therefrom to thereby support the collar portion 23 of the gas detection element 7.
   In addition, a thread portion 41 is formed on an outer circumferential surface of a front end portion of the metal shell 13 to mount the gas sensor 3 on the exhaust pipe. A hexagonal portion 43 is provided circumferentially at a rear end of the thread portion 41, and a mounting tool for screwing the thread portion 41 into the exhaust pipe is brought into engagement with this hexagonal portion 43. Further, a cylindrical portion 45 is provided at a rear end of the hexagonal portion 43 of the metal shell 13.
   The protector 15 is made of, for example, a SUS310S and is a protection member which covers the front end portion of the gas detection element 3. This protector 15 extends rearwards and a rear end edge of thereof is held between the collar portion 23 of the gas detection element 3 and the step portion 39 of the metal shell 13 to thereby be fixed in place.
   In addition, a ceramic powder 47 and a ceramic sleeve 49 made from alumina are disposed between the metal shell 13 and the gas detection element 3 in that order from the front end.
   Further, a front end portion 55 of the pipe 17 which is made of, for example, a SUS304L is disposed inside a rear end portion 51 of the cylindrical portion 45 of the metal shell 13 via a metal ring 53 made of, for example, a SUS430, and by crimping this front end portion 55 at the rear end portion 51 of the cylindrical portion 45, the pipe 17 is fixed to the metal shell 13.
   Additionally, a cylindrical filter 57 made from, for example, PTFE is fitted on an outer circumference of the pipe 17, and the protection pipe 19 made of, for example, a SUS 304L is fitted on an outer circumference of the filter 57. This filter 57 is permeable to air or gas and can prevent the infiltration of water.
   Then, by crimping the protection pipe 19 from an outer circumferential side, the pipe 17, the filter 57 and the protection pipe 19 are fixed together.
   Since ventilation holes 59, 61 are provided in the pipe 17 and the protection pipe 19, respectively, ventilation can be established between the interior and exterior of the gas sensor 1 via the individual ventilation holes 59, 61 and the filter 57.
b) Next, a ventilation path will be described which constitutes an essential part of the gas sensor 1 of the first embodiment.
   In the gas sensor 1 of the first embodiment, an oxygen concentration in exhaust gas in an outer space at the front end portion of the gas sensor 1 is detected by making use of an electromotive force generated by a difference in oxygen concentration between the interior and exterior of the gas detection element 3. Therefore, the outside of the front end portion of the gas sensor 1 needs to be separated from the interior of the gas sensor 1, specifically, an internal space 63 of the gas detection element 3 on the inner electrode 33 side.
   Moreover, since the interior of the internal space 63 of the gas detection element 3 is used as an oxygen reference source, the internal space 63 needs to communicate with the atmosphere via the ventilation holes 59, 61 and the space 18. To make this happen, in the first embodiment, the following ventilation path is ensured by making use of the terminal metal fixture 9. Hereinafter, this will be described in detail.
   As shown in Fig. 1, the terminal metal fixture 9 is fitted in the internal space 63 of the gas detection element 3 to be brought into contact with the inner electrode 33. In addition, as shown in Fig. 3, a front end of the lead wire 11 is connected to be fixed to the terminal metal fixture 9 within the internal space 63. It should be noted that the lead wire 11 is made up of a core wire 65 and a cover portion 67 which covers an outer circumference of the core wire 65.
   Specifically speaking, as shown in Fig. 4, the terminal metal fixture 9 is worked out of a single metal plate and includes a substantially C-shaped electrode contact portion 69 (in a section vertical to an axial direction) which is tightly adhered to the inner electrode 33, a first fixing portion 71 which is provided at a front end portion of the electrode contact portion 69 to fixedly grip the cover portion 67 of the lead wire 11 from the outside and plural second fixing portions (namely lead wire connecting portions) 73 which are provided at a distal end portion of the first fixing portion 71 to fixedly grip the core wire 65.
   In particular, three plate-shaped flange pieces 75 are formed on the terminal metal fixture 9 so as to extend at equal intervals in a petal-like fashion along a radial direction (a direction normal to the axial direction) from a rear end portion of the electrode contact portion 69. Namely, the flange pieces 75 are disposed so as to be separated at equal intervals of a predetermined center angle in a circumferential direction thereof, and therefore, a gap 74 is provided between the adjacent flange pieces 75, and ventilation paths 79 (indicated by arrows) are formed by these gaps 74.
   It should be noted that all the flange pieces 75 are generally referred to as a flange portion 77. Additionally, as shown in an enlarged sectional view of an essential part in Fig. 5, a portion of the terminal metal fixture 9 which projects further rearwards (upwards in the figure) than a rear end face 81 of the gas detection element 3 is referred to as an exposed portion 78. Consequently, in this embodiment, the flange portion 77 (consequently, the flange pieces 75) corresponds to the exposed portion 78.
   Specifically, as shown in Fig. 5, each flange piece 75 is held between the rear end face 81 of the gas detection element 3 and a front end face 83 of the separator 5, and therefore, a space 76 equal to the thickness of the flange piece 75 is defined between both the end faces 81, 83. Moreover, the flange pieces 75 are separated in the circumferential direction in the petal-like fashion, and therefore, the gap 74 defined individually between the flange pieces 75 so separated constitutes part of the ventilation path 79 which establishes a communication between the internal space 63 of the gas detection element 3 and an exterior portion. Additionally, a space between an upper end of the electrode contact portion 69 and the front end face 83 of the separator 5 also constitutes part of the ventilation path 79.
   Moreover, as shown in Fig. 1, this ventilation path 79 communicates with the space 18, the ventilation hole 59 in the pipe 17 and the ventilation hole 61 in the protection pipe 19. Therefore, the internal space 63 of the gas detection element 3 communicates with the exterior of the gas sensor 1 (the atmosphere).
   The rear end portion of the gas sensor 1 is gas or airtightly closed by the closure member 7. Additionally, a space 85 inside the pipe 17 and an external space at the front end portion of the gas detection element 3 are made gas or airtight by the ceramic sleeve 49 and the ceramic powder 47. Therefore, the internal space 63 of the gas detection element 3 is allowed to communicate with the atmosphere only via the ventilation path 79 and the ventilation holes 59, 61.
(c) Next, a fabrication procedure for fabricating the gas sensor 1 of the first embodiment will briefly be described.
   As shown in Fig. 1, the protector 15 is pushed into a through hole 87 in the metal shell 13 from above in the figure.
   Next, the gas detection element 3 is inserted into the through hole 87 in the metal shell 13.
   Next, the ceramic powder 47 and the ceramic sleeve 49 are disposed sequentially in that order in the space defined between the metal shell 13 and the gas detection element 3.
   Next, the front end portion 55 of the pipe 17 which expands radially on a front end side is disposed on top of the ceramic sleeve 49, and a metal ring 53 is fitted on the front end portion 55.
   In this state, the rear end portion 51 of the metal shell 13 is crimped so as to fix the pipe 17 in place via the metal ring 53. Thereafter, the filter 57 is fitted on the outer circumference of the pipe 17.
   Apart from this, as shown in Fig. 3, the lead wire 11 is inserted through the through hole 35 in the separator 5, the through hole 37 in the closure member 7 and the through hole 89 in the protection pipe 19, and the terminal metal fixture 9 is fixed to the front end of the lead wire 11, preparing a compound member 91.
   Additionally, as shown in Fig. 1, a front end of the terminal metal fixture 9 of the compound member 91 is inserted into the internal space 63 of the gas detection element 3, whereby the terminal metal fixture 9 and the inner electrode 33 are brought into contact with each other.
   As this occurs, the flange pieces 75 of the terminal metal fixture 9 are brought into abutment with the rear end face 81 of the gas detection element 3, whereby the terminal metal fixture 9 is positioned in place.
   At the same time, the separator 5, the closure member 7 and the protection pipe 19 are pushed towards the front end, and the separator 5 and part of the closure member 7 are disposed inside the pipe 17, the protection pipe 19 being fitted on an outer circumferential side of the filter 57.
   Thereafter, by crimping the protection pipe 19 from the outer circumferential side thereof, the protection pipe 19 and the pipe 17 are fixed together, the gas sensor 1 being thereby completed.
d) In this way, in the first embodiment, the terminal metal fixture 9 fitted in the internal space 63 of the gas detection element 3 is brought into contact with the inner electrode 33 and is brought into connection with the lead wire 11 within the internal space 63 (which lies further forwards than the flange pieces 75). In addition, the flange pieces 75 of the terminal metal fixture 9 are held between the rear end face 81 of the gas detection element 3 and the front end face 83 of the separator 5, whereby the terminal metal fixture 9 is positioned in place. Consequently, compared with the related art gas sensor, a length in the axial direction of the gas sensor 1 can be made shorter, thereby making it possible to make the gas sensor 1 compact in size.

In particular, in the first embodiment, the plural flange pieces 75 are provided at the rear end portion of the terminal metal fixture 9 so as to project radially in the petal-like fashion, and the gas detection element 3 and the separator 5 are disposed so as to hold the flange pieces 75 therebetween. By so doing, the space 76 of the predetermined thickness or degree of vertical openness is provided between the gas detection element 3 and the separator 5, and the gaps 74 (based on the space 76) are provided between the adjacent flange pieces 75, whereby the ventilation path 79 is formed.

By adopting this configuration, not only is the gas sensor 1 made compact in size, but also the ventilation path 79 is provided between the flange pieces 75, whereby the communication is established between the atmosphere and the internal space 63 of the gas detection element 3.

Consequently, not only can atmospheric air be introduced into the internal space 63 of the gas detection element 3 as an oxygen reference source in an ensured fashion, but also the internal space 63 can be ventilated so as to exhaust gas generated therein. By so doing, a remarkable advantage can be obtained that an oxygen concentration can be measured with high accuracy at all times.

Further, in the first embodiment, the rear end face 97 of the separator 5 is tightly adhered to the front end face 95 of the closure member 7. Consequently, the gas sensor 1 can be made smaller in size.

In addition, when the rear end face 97 of the separator 5 is tightly adhered to the front end face 95 of the closure member 7, a ventilation path through which gas can flow is not ensured between the internal space 63 and the outside of the gas detection element 3 via the gap between the rear end face 97 of the separator 5 and the front end face 95 of the closure member 7 (and further via the through hole 35 in the separator 5). In the first embodiment, however, the ventilation path 79 is ensured between the flange pieces 75 by the gaps 74 which establish a communication between the internal space 63 and the outside (the space 18) of the gas detection element 3. Therefore, gas is allowed to flow between the inside and outside of the gas sensor 1 by the ventilation path 79.

### [Second Embodiment]

Next, a gas sensor of a second embodiment will be described. Like reference numeral will be given to like constituent parts or portions to those of the first embodiment for description, or the description thereof will be omitted.

The second embodiment differs from the first embodiment only in the shape of a terminal metal fixture, and hence, the different feature will be described.

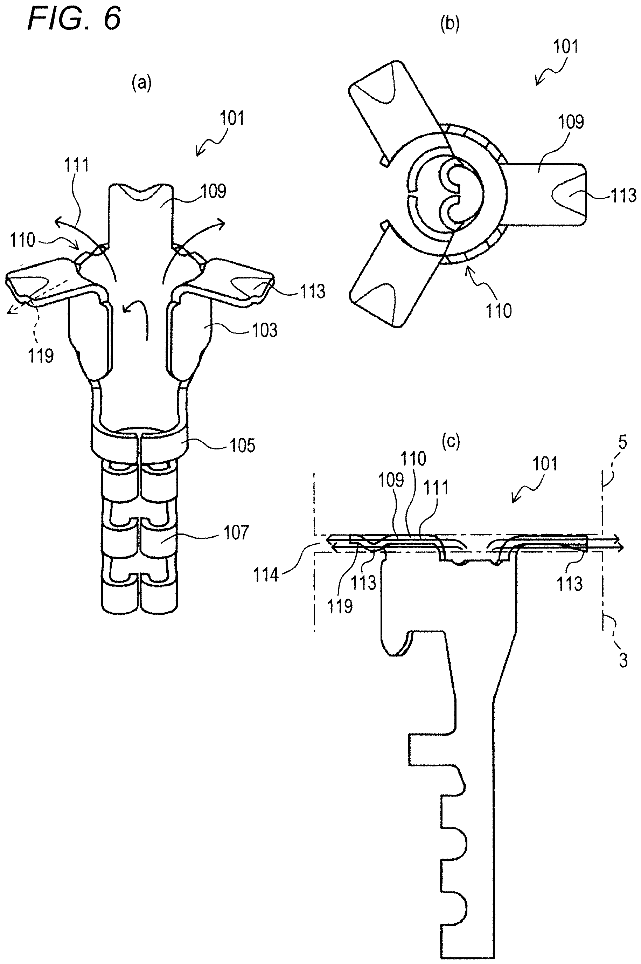

As shown in Fig. 6, like the terminal metal fixture of the first embodiment, a terminal metal fixture 101 used in the second embodiment includes an electrode contact portion 103, a first fixing portion 105 and a second fixing portion 107. Additionally, the terminal metal fixture 101 includes at a rear end portion of the electrode contact portion 103 three flange pieces 109 which extend radially as petals of a flower do.

Gaps 110 are present between the adjacent flange pieces 109, and therefore as in the first embodiment, these gaps 110 constitute a ventilation path 111.

Further, in the second embodiment, a projecting portion 113 which projects in a thickness direction is formed on each of the flange pieces 109. Namely, as shown in Figs. 6(b) and 6(c), the projecting portion 113 is formed so that the projecting amount in the thickness direction increases as the projecting portion 113 extends radially towards a distal end of the flange piece 109. In addition, this projecting portion 113 is not formed along the full circumferential width of the flange piece 109 but is formed only partially.

Consequently, in this embodiment, as shown in Fig. 6(c), when the flange pieces 109 are held between a gas detection element 3 and a separator 5, compared with the first embodiment, a larger space 114 (which is larger by the projection amount of the projecting portion 113) is formed. Consequently, a larger thickness or larger degree of vertical openness can be ensured for the gap 110 (and hence, the ventilation path 111) at each flange piece 109. In addition, the projecting portion 113 is not formed along the full circumferential width of the flange piece 109, and therefore, the ventilation is not interrupted by the projecting portion 113, and spaces 119 where no projecting portion 113 of the flange piece 109 is provided can also be made use of as part of the ventilation path 111.

Consequently, in the second embodiment, the same advantage as that of the first embodiment is provided. Additionally, the ventilation path 111 is larger, and therefore, a remarkable advantage can be provided that not only can the oxygen reference source be ensured more easily, but also exhaust gas can be exhausted more easily.

### [Third Embodiment]

Next, a gas sensor of a third embodiment will be described. Like reference numeral will be given to like constituent parts or portions to those of the first embodiment for description, or the description thereof will be omitted.

The third embodiment differs from the first embodiment only in the shape of a terminal metal fixture, and hence, the different feature will be described.

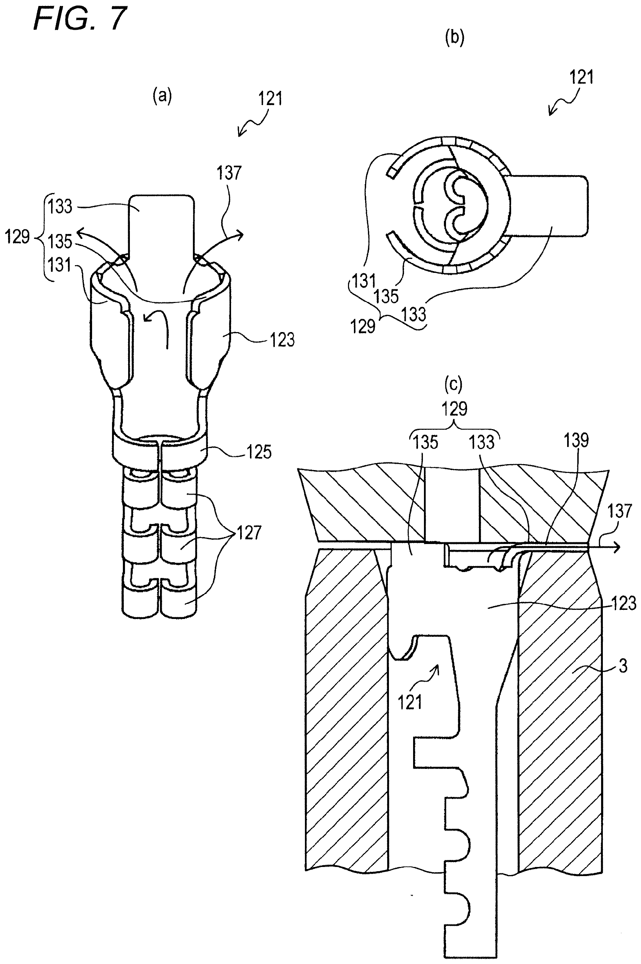

As shown in Fig. 7, like the terminal metal fixture 9 of the first embodiment, a terminal metal fixture 121 used in the third embodiment includes an electrode contact portion 123, a first fixing portion 125 and a second fixing portion 127.

In particular, in the third embodiment, the shape of an exposed portion 129 which is provided at a rear end portion (at an upper portion in Figs. 7(a), 7(c)) of the terminal metal fixture 121 differs from that of the first embodiment.

Specifically, a first projecting portion 131, a flange piece 133 and a second projecting portion 135 are provided at the rear end portion of the electrode contact portion 123 at equal intervals in the same positions as those where the flange pieces are provided in the first embodiment.

In these projecting portions and flange piece, the flange piece 133 is similar to the flange piece of the first embodiment, and the first and second projecting portions 131, 135 project rearwards from a rear end of the electrode contact portion 123 in a width of the flange piece 133 and by a distance equal to the thickness of the flange piece 133.

In the third embodiment, too, a gap 139 which constitutes a ventilation path 137 can be provided between a gas detection element 3 and a separator 5 by the exposed portion 129 which is made up of the first projecting portion 131, the flange piece 133 and the second projecting portion 135. Thus, the same advantage as that provided by the first embodiment can be provided by the third embodiment.

### [Fourth Embodiment]

Next, a gas sensor of a fourth embodiment will be described. Like reference numeral will be given to like constituent parts or portions to those of the second embodiment for description, or the description thereof will be omitted.

Although in the second embodiment, the projecting portions 113 are provided on the flange pieces 109 so that the projecting amount in the thickness direction increases as the projecting portions 113 extend radially to the distal ends of the flange pieces 109, the invention is not limited thereto, and hence, a projecting portion having a shape which will be described below may be provided on the flange piece.

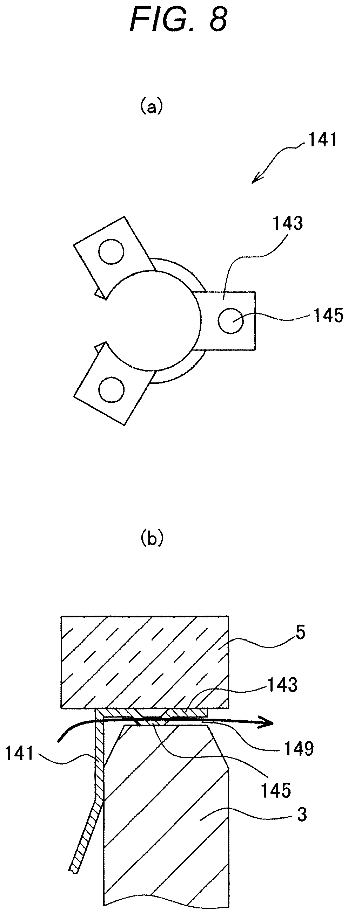

Specifically, as shown in Fig. 8(a), three flange pieces 143 which are similar to those of the second embodiment are formed on a terminal metal fixture 141 of the fourth embodiment, and a projecting portion (a spot-like projection) 145 which projects in circle in the thickness direction of the flange piece 143 is formed substantially in the center of each flange piece 143.

Consequently, as shown in Fig. 8(b), when the flange pieces 143 of the terminal metal fixture 141 are held between a gas detection element 3 and a separator 5, a larger ventilation path 149 than that of the first embodiment can be ensured.

### [Fifth Embodiment]

Next, a gas sensor of a fifth embodiment will be described. Like reference numeral will be given to like constituent parts or portions to those of the fourth embodiment for description, or the description thereof will be omitted.

The fifth embodiment differs from the fourth embodiment only in the shape of a terminal metal fixture, and hence, the different feature will be described.

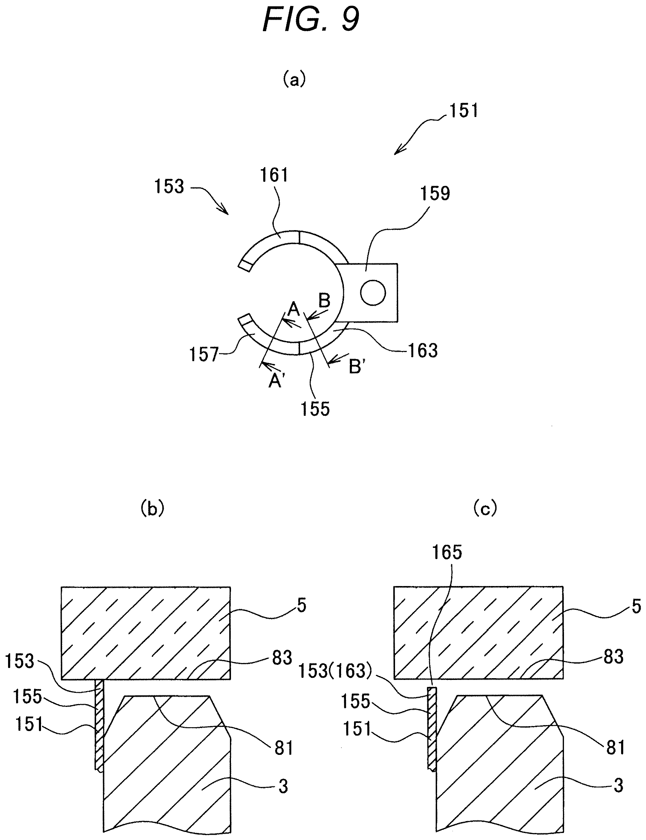

As shown in Fig. 9, a terminal metal fixture 151 used in the fifth embodiment differs from that of the fourth embodiment in the shape of an exposed portion 153 which is provided at a rear end portion (on a near side in Fig. 9(a)) of the terminal metal fixture 151.

Specifically, a first projecting portion 157, a flange piece 159 and a second projecting portion 161 are provided at a rear end portion of an electrode contact portion 155 in the same positions as those in the fourth embodiment where the flange pieces are provided.

In these projecting portions and flange piece, the flange piece 159 is similar to the flange piece of the fourth embodiment, and the first and second projecting portions 157, 161 project, as shown in Fig. 9(b), rearwards from a rear end of the electrode contact portion 155 in a width of the flange piece 159 and by a distance equal to the thickness of the flange piece 159 in a similar way in which the corresponding projecting portions in the fourth embodiment do so as to be brought into abutment with a front end face 83 of a separator 5.

In addition, in the fifth embodiment, in the exposed portion 153, an exposed portion 163 other than those where the first and second projecting portions 157, 161 and the flange piece 159 are formed projects, as shown in Fig. 9(c), so as to be positioned between a rear end face 81 of a gas detection element 3 and a front end face 83 of the separator 5. Namely, a gap 165 is provided between a front end of the exposed portion 163 and the front end face 83 of the separator 5.

In the fifth embodiment, too, the same advantage provided by the fourth embodiment can be provided.

### [Sixth Embodiment]

Next, a gas sensor of a sixth embodiment will be described. Like reference numeral will be given to like constituent parts or portions to those of the fourth embodiment for description, or the description thereof will be omitted.

The sixth embodiment differs from the fourth embodiment only in the shape of an exposed portion of a terminal metal fixture, and hence, the different feature will be described.

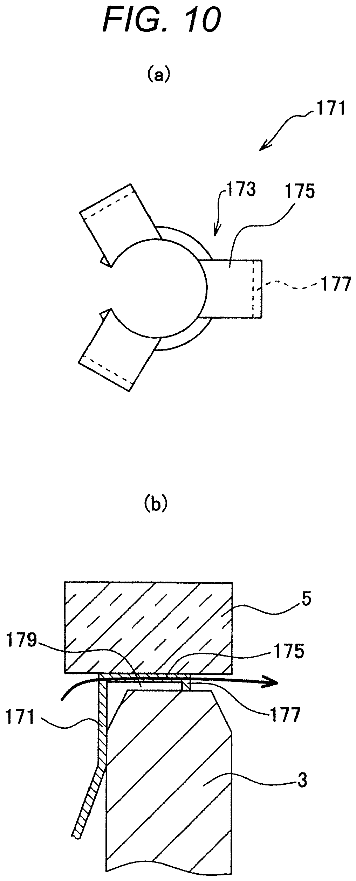

In addition, as shown in Fig. 10(a), in a terminal metal fixture 171 of the sixth embodiment, flange pieces 175 which are similar to those of the second embodiment are formed on an exposed portion 173 of the terminal metal fixture 171. Additionally, a projecting portion 177 is formed on each of the flange pieces 175 at a distal end portion in a radial direction thereof so as to be bent in a thickness direction of the flange piece 175.

Consequently, as shown in Fig. 10(b), when the flange pieces 175 of the terminal metal fixture 171 are held between a gas detection element 3 and a separator 5, a larger ventilation path 179 than that of the first embodiment can be ensured.

In the sixth embodiment, too, the same advantage as that provided by the fourth embodiment can be provided.

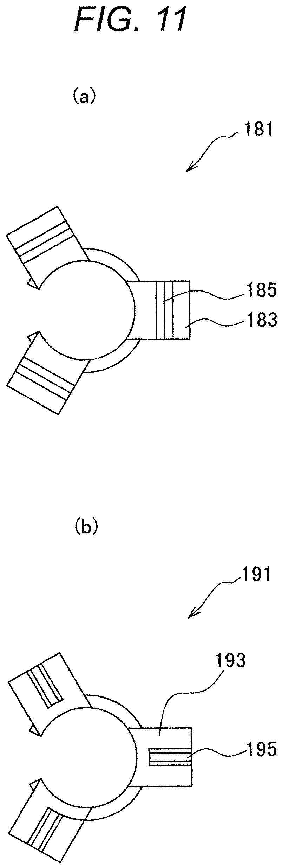

In addition, a terminal metal fixture 181 shown in Fig. 11(a) can be adopted as a modified example made to the terminal metal fixture of the sixth embodiment.

Flange pieces 183 similar to those of the second embodiment are formed on this terminal metal fixture 181. Additionally, a linear projecting portion 185 is formed on each of the flange pieces 183 on a front end side in a thickness direction thereof so as to traverse the flange piece 183 in a circumferential direction.

Consequently, although not shown, when the flange pieces 183 of the terminal metal fixture 181 are held between a gas detection element 3 and a separator 5, a larger ventilation path than that of the first embodiment can be ensured.

Further, a terminal metal fixture 191 shown in Fig. 11(b) can be adopted as another modified example made to the terminal metal fixture of the sixth embodiment.

Flange pieces 193 which are similar to those of the second embodiment are formed on the terminal metal fixture 191. Additionally, a linear projecting portion 195 is formed on each of the flange pieces 193 on a front end side in a thickness direction thereof so as to extend in a radial direction of the flange piece 193.

Consequently, although not shown, when the flange pieces 193 of the terminal metal fixture 191 are held between a gas detection element 3 and a separator 5, a larger ventilation path than that of the first embodiment can be ensured.

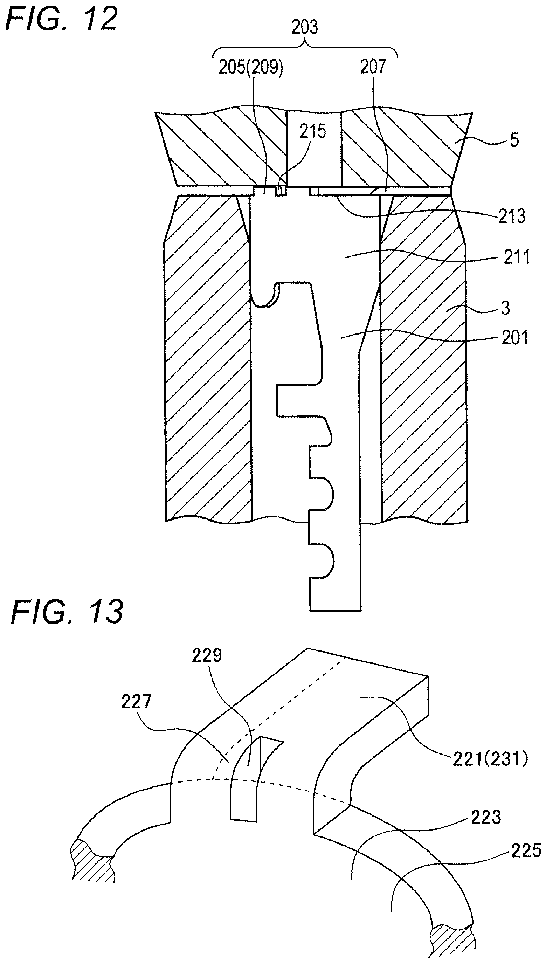

Thus, while the embodiments of the invention have been described heretofore, the invention is not limited to those embodiments, and hence, the invention can be carried out in various forms without departing from the spirit and scope of the invention.
(1) For example, while in the second embodiment, one projecting portion 113 is provided on each of the flange pieces 109, the invention is not limited thereto. Thus, plural projecting portions may be provided on one flange piece. Additionally, while in the second embodiment, the projecting portion 113 is provided on each flange piece 109, the invention is not limited thereto. Thus, the flange portion may include a flange piece on which a projecting portion is provided and a flange piece on which no projecting portion is provided.
(2) In addition, while in the second embodiment, the projecting portion 113 is provided on the flange piece 109 so as to extend towards the distal end of the flange piece 109. However, the invention is not limited thereto. When a projecting portion is provided on a flange piece, the projecting portion may be provided on a rear end side in the thickness direction of the flange piece so as to project therefrom. Further, a projecting portion may be provided on each of front end and rear end sides of the flange piece so as to project therefrom.
(3) Further, Fig. 12 shows a modified example made to the third embodiment. A terminal metal fixture 201 of this modified example differs from that of the third embodiment in the shape of an exposed portion 203.
   Specifically, while the shapes of a first projecting portion 205, a flange piece 207 and a second projecting portion 209 are the same as those of the third embodiment, a rear end portion 213 of an electrode contact portion 211 is provided on the same plane as (or level with) a rear end face 81 of a gas detection element 3 between the first projecting portion 205, the flange piece 207 and the second projecting portion 209 in a circumferential direction.
   In addition, a slit-like cutout 215 which allows the passage of gas may be provided at a rear end of each of the first projecting portion 205 and the second projecting portion 209 (a similar cutout may be provided in the projecting portions of the other embodiments).
(4) Additionally, a slit-like cutout 229 may be provided in a curved portion of the flange piece in the second embodiment and fourth to sixth embodiments, that is, in a portion 227 where a flange piece 221 extends rearwards from a rear end of an electrode contact portion 223 and is bent to extend radially outwards, as shown in Fig. 13. By so doing, gas can pass even at a flange portion 231 (that is, even at a portion where the flange portion 231 is formed).

### [Description of Reference Numerals]

1: Gas sensor; 3: Gas detection element; 5: Separator; 7: Closure member; 9, 101, 121, 131, 141, 151, 171, 181, 191, 201, 225: Terminal metal fixture; 11: Lead wire; 13: Metal shell; 15: Protector; 17: Pipe; 18: Space; 19: Protection pipe; 27: Outer electrode: 33: Inner electrode; 59, 61: Ventilation hole; 63: Internal space; 69: Electrode contact portion; 73: Lead wire connecting portion (Second fixing portion); 74, 110, 139, 165: Gap; 75, 109, 123, 133, 143, 159, 175, 183, 193, 207, 221: Flange piece; 76, 114: Space; 77, 231: Flange portion; 78, 129, 153, 173, 203: Exposed portion; 79, 111, 129, 179: Ventilation path; 113, 125, 135, 145, 155: Projecting portion.

## Claims

1. A gas sensor (1) comprising:
a gas detection element (3) comprising,
an element main body (21) which is made up of a cylindrical solid electrolyte which extends in an axial direction and which is closed at a front end thereof, and
an inner electrode (33) and an outer electrode (27) which are provided on an inner side and an outer side of the element main body, respectively;
a cylindrical casing (20) which holds the gas detection element inside a through hole which penetrates in the axial direction;
a cylindrical separator (5) having electrical insulation properties, which is disposed in an interior of the casing at a rear end side of the gas detection element with a space (18) defined between the casing and itself and through which at least a lead wire (11) is passed;
a closure member (7) which is disposed at a rear end side of the separator, through which the lead wire is inserted, and which closes a rear end side of the casing; and
a terminal metal fixture (9) which has an electrode contact portion (69) fitted in the gas detection element so as to be brought into contact with the inner electrode and which is connected to the lead wire,
wherein the casing has a ventilation hole (59, 61) which is formed at a position further forwards than the closure member to introduce a reference gas from the outside thereof,
wherein the terminal metal fixture (9) comprises a lead wire connecting portior (71, 73) which is fitted in the gas detection element (3) and to which the lead wire is connected and an exposed portion (78) which is provided further rearwards than the gas detection element and at least a part of which is brought into contact with the separator,
wherein the exposed portion (78) comprises a flange portion (77) which is held between a rear end face of the gas detection element (3) and a front end face of the separator (5) and which projects further radially outwards than the electrode contact portion, and has a gap (74) which is provided between surfaces defined by the rear end face of the gas detection element and the front end face of the separator at a predetermined location in a circumferential direction so as to establish communication between the space (18) and an interior of the gas detection element, and
wherein the reference gas that has passed through the ventilation hole (59, 61) passes through the space (18) and the gap (74) to be introduced into an interior of the gas detection element.

2. A gas sensor as set forth in Claim 1,
wherein the flange portion comprises a plurality of flange pieces, and
wherein the flange pieces are disposed in the circumferential direction with the gap defined therebetween.

3. A gas sensor as set forth in Claim 2,
wherein a projecting portion is formed to the flange piece which projects in the axial direction to maintain a space between a rear end portion of the gas detection element and a front end portion of the separator.

4. A gas sensor as set forth in Claim 3,
wherein the projecting portion is formed to the flange piece at only a part in a circumferential direction thereof.

5. A gas sensor as set forth in any of Claims 1 to 4,
wherein a rear end face of the separator and a front end face of the closure member are tightly adhered to each other.

## Patentansprüche

1. Gas-Sensor (1), der umfasst:
ein Gas-Erfassungselement (3), das umfasst:
einen Element-Hauptkörper (21), der aus einem zylindrischen Festelektrolyt besteht, sich in einer axialen Richtung erstreckt und an seinem vorderen Ende geschlossen ist, sowie
eine innere Elektrode (33) und eine äußere Elektrode (27), die sich an einer Innenseite bzw. einer Außenseite des Element-Hauptkörpers befinden;
ein zylindrisches Gehäuse (20), das das Gas-Erfassungselement im Inneren eines Durchgangslochs aufnimmt, das in der axialen Richtung verläuft;
einen zylindrischen Separator (5), der elektrisches Isoliervermögen aufweist, in einem Innenraum des Gehäuses an einer Seite des hinteren Endes des Gas-Erfassungselementes angeordnet ist, wobei ein Zwischenraum (18) zwischen dem Gehäuse und in ihm ausgebildet ist, durch den wenigstens ein Zuleitungsdraht (11) geführt wird;
ein Verschlussteil (7), das an einer Seite des hinteren Endes des Separators angeordnet ist, über das der Zuleitungsdraht eingeführt wird und das eine Seite des hinteren Endes des Gehäuses verschließt; sowie
ein Anschluss-Metallteil (9), das einen Elektroden-Kontaktabschnitt (69) aufweist, der so in das Gas-Erfassungselement eingepasst ist, dass er in Kontakt mit der inneren Elektrode gebracht wird, und das mit dem Zuleitungsdraht verbunden ist,
wobei das Gehäuse ein Lüftungsloch (59, 61) aufweist, das an einer Position ausgebildet ist, die weiter vorn liegt als das Verschlussteil (7), um ein Bezugs-Gas von einer Außenseite einzuleiten,
das Anschluss-Metallteil (9) einen Zuleitungsdraht-Verbindungsabschnitt (71, 73), der in das Gas-Erfassungselement (3) eingepasst ist und mit dem der Zuleitungsdraht verbunden ist, sowie einen freiliegenden Abschnitt (78) umfasst, der weiter hinten liegt als das Gas-Erfassungselement, wobei wenigstens ein Teil desselben mit dem Separator in Kontakt gebracht wird,
der freiliegende Abschnitt (78) einen Flanschabschnitt (77) umfasst, der zwischen einer hinteren Endfläche des Gas-Erfassungselementes (3) und einer vorderen Endfläche des Separators (5) gehalten wird und der weiter radial nach außen vorsteht als der Elektroden-Kontaktabschnitt (69), und der einen Spalt (74) aufweist, der sich zwischen Flächen befindet, die durch die hintere Endfläche des Gas-Erfassungselementes und die vordere Endfläche des Separators an einer vorgegebenen Position in einer Umfangsrichtung gebildet wird, um so Verbindung zwischen dem Zwischenraum (18) und einem Innenraum des Gas-Erfassungselementes herzustellen, und
das Bezugs-Gas, das durch das Lüftungsloch (59, 61) hindurch getreten ist, durch den Zwischenraum (18) und den Spalt (74) hindurchtritt und in einen Innenraum des Gas-Erfassungselementes eingeleitet wird.

2. Gas-Sensor nach Anspruch 1,
wobei der Flanschabschnitt eine Vielzahl von Flanschteilen umfasst, und
die Flanschteile in der Umfangsrichtung mit dem zwischen ihnen ausgebildeten Spalt angeordnet sind.

3. Gas-Sensor nach Anspruch 2,
wobei ein vorstehender Abschnitt an dem Flanschteil ausgebildet ist, der in der axialen Richtung so vorsteht, dass ein Zwischenraum zwischen einem hinteren Endabschnitt des Gas-Erfassungselementes und einem vorderen Endabschnitt des Separators aufrechterhalten wird.

4. Gas-Sensor nach Anspruch 3,
wobei der vorstehende Abschnitt an dem Flanschteil nur an einem Teil in einer Umfangsrichtung desselben ausgebildet ist.

5. Gas-Sensor nach einem der Ansprüche 1 bis 4,
wobei eine hintere Endfläche des Separators und eine vordere Endfläche des Verschlussteils eng aneinander liegen.

## Revendications

1. Capteur de gaz (1) comprenant :
un élément de détection de gaz (3) comprenant
un corps principal d'élément (21) constitué d'un électrolyte solide cylindrique qui s'étend en direction axiale et qui est fermé à son extrémité avant, et
une électrode interne (33) et une électrode externe (27) qui sont respectivement pourvues sur un côté interne et sur un côté externe du corps principal d'élément ;
un boîtier cylindrique (20) qui maintient l'élément de détection de gaz dans un trou traversant qui le pénètre en direction axiale ;
un séparateur cylindrique (5) présentant des propriétés d'isolation électrique, qui est disposé à l'intérieur du boîtier sur un côté d'extrémité arrière de l'élément de détection de gaz avec un espace (18) défini entre le boîtier et lui-même, et à travers lequel passe au moins un fil conducteur (11) ;
un élément de fermeture (7) qui est disposé sur un côté d'extrémité arrière du séparateur, à travers lequel est inséré le fil conducteur, et qui ferme un côté d'extrémité arrière du boîtier ; et
une monture de borne métallique (9) qui comporte une portion de contact d'électrode (69) montée dans l'élément de détection de gaz de manière à être mise en contact avec l'électrode interne et qui est connectée au fil conducteur,
dans lequel le boîtier comporte un trou de ventilation (59, 61) qui est formé à une position plus en avant que l'élément de fermeture pour introduire un gaz de référence provenant de l'extérieur,
dans lequel la monture de borne métallique (9) comprend une portion de connexion de fil conducteur (71, 73) qui est montée dans l'élément de détection de gaz (3) et à laquelle est connecté le fil conducteur, et
une portion exposée (78) qui est pourvue plus en arrière que l'élément de détection de gaz et dont au moins une partie est amenée en contact avec le séparateur,
dans lequel la portion exposée (78) comprend une portion de bride (77) qui est maintenue entre une face d'extrémité arrière de l'élément de détection de gaz (3) et une face d'extrémité avant du séparateur (5) et qui se projette radialement plus à l'extérieur que la portion de contact d'électrode, et présente un intervalle (74) pourvu entre des surfaces définies par la face d'extrémité arrière de l'élément de détection de gaz et la face d'extrémité avant du séparateur à une position prédéterminée en direction circonférentielle de manière à établir une communication entre l'espace (18) et l'intérieur de l'élément de détection de gaz, et
dans lequel le gaz de référence qui a traversé le trou de ventilation (59, 61) passe par l'espace (18) et l'intervalle (74) pour être introduit à l'intérieur de l'élément de détection de gaz.

2. Capteur de gaz selon la revendication 1,
dans lequel la portion de bride comprend une pluralité de pièces de bride, et
dans lequel les pièces de bride sont disposées en direction circonférentielle avec l'intervalle défini entre elles.

3. Capteur de gaz selon la revendication 2,
dans lequel une portion de projection est formée sur la pièce de bride qui se projette en direction axiale pour maintenir un espace entre une portion d'extrémité arrière de l'élément de détection de gaz et une portion d'extrémité avant du séparateur.

4. Capteur de gaz selon la revendication 3,
dans lequel la portion de projection est formée sur la pièce de bride sur une partie seulement en direction circonférentielle.

5. Capteur de gaz selon l'une quelconque des revendications 1 à 4,
dans lequel une face d'extrémité arrière du séparateur et une face d'extrémité avant de l'élément de fermeture adhèrent fermement l'une à l'autre.
